# EUROPÄISCHE PATENTSCHRIFT

(11) **EP 3 161 331 B1**
(45) Veröffentlichungstag und Bekanntmachung des Hinweises auf die Patenterteilung: **06.06.2018**
(21) Anmeldenummer: 15720674.9
(22) Anmeldetag: 28.04.2015
(51) Int. Cl.: F16B 5/06, H01R 13/74

(54) **VERBINDUNGSANORDNUNG**
CONNECTION ARRANGEMENT
DISPOSITIF DE LIAISON

(30) Priorität: 25.06.2014 DE 102014108907
(43) Veröffentlichungstag der Anmeldung: 03.05.2017
(73) Patentinhaber: Phoenix Contact GmbH & Co. KG, 32825 Blomberg (DE)
(72) Erfinder: WENDT, Andreas, 13407 Berlin (DE); BECKMANN, Ralf, 32758 Detmold (DE)
(74) Vertreter: Janke, Christiane
(86) Internationale Anmeldenummer: PCT/EP2015/059153
(87) Internationale Veröffentlichungsnummer: WO 2015/197235

(56) Entgegenhaltungen:
- EP-A2- 1 942 567
- DE-T5-112012 003 463
- JP-A- 2000 346 040

## Beschreibung

Die Erfindung betrifft eine Verbindungsanordnung umfassend einen Gehäusekörper mit einem Verbindungsabschnitt, an dem auf zwei gegenüberliegenden Seiten jeweils mindestens ein Gehäuseanlagekeil mit einer unter einem Keilwinkel zu einer Montagerichtung orientierten Anlagefläche ausgebildet ist, und mit einem Anlageabschnitt, wobei eine an dem Anlageabschnitt gebildete Klemmfläche beabstandet zu der Anlagefläche des mindestens einen Gehäuseanlagekeils vorgesehen ist, und umfassend einen im Bereich des Verbindungsabschnitts an den Gehäusekörper ansetzbaren Verbindungskörper, an dem mindestens ein Verbindungsanlagekeil vorgesehen ist, welcher eine unter dem gleichen Keilwinkel zur Montagerichtung orientierte Anlagefläche aufweist, wobei in einem montierten Zustand die Anlageflächen des Gehäuseanlagekeils und des Verbindungsanlagekeils einander berühren.

Eine gattungsgemäße Verbindungsanordnung dient beispielsweise dazu, eine Anschlussklemme an einer Gerätewand zu befestigen. Die Verbindungsanordnung umfasst dabei einen Gehäusekörper, welcher mit einem Anlageabschnitt an einer Ausnehmung der Gehäusewand angesetzt wird, und einen Verbindungskörper, welcher an einem Verbindungsabschnitt des Gehäusekörpers angesetzt wird. Jeweils sind an dem Gehäusekörper und an dem Verbindungskörper korrespondierend gestaltete Anlagekeile mit im montierten Zustand aneinander anliegenden Anlageflächen vorgesehen. Die Anlagekeile werden zum Festlegen des Gehäusekörpers und des Verbindungskörpers an der Gerätewand verklemmt.

Beispielsweise wird zum Festlegen der Anschlussklemmen die Geometrie des Gehäusekörpers beziehungsweise des Verbindungskörpers auf eine Wandstärke des Geräts abgestimmt. Jeder Gehäusekörper beziehungsweise jeder Verbindungskörper ist dann für eine spezielle Gerätewandstärke geeignet. Es bedarf insofern einer großen Vielzahl von Verbindungsanordnungen, um für beliebige Gerätewandstärken geeignete Verbindungsanordnungen zu schaffen. Beispielsweise kann der Anlagekeil an dem Verbindungskörper vergleichsweise lang ausgebildet sein, um ein hohes Maß an Flexibilität zu erreichen und eine Festlegung bei möglichst unterschiedlichen Gerätewandstärken zu gewährleisten. Abhängig von den tatsächlichen geometrischen Verhältnissen kann der Verbindungskörper jedoch vergleichsweise weit herausragen beziehungsweise ungewünscht große Abmessungen besitzen. Beispielsweise ist bekannt, den Gehäuseanlagekeil weit beabstandet zur Gerätewand vorzusehen und abhängig von der jeweiligen Montagesituation Abstandselemente zwischenzulegen, um eine Festlegung der Anlagekeile aneinander unabhängig von der Gerätewandstärke zu gewährleisten. Hierdurch erhöht sich jedoch der Montageaufwand erheblich.

Eine gattungsgemäße Verbindungsanordnung ist beispielsweise aus der nachveröffentlichten deutschen Patentanmeldung DE 10 2014 103 991.2 der Anmelderin bekannt. Hierbei ist vorgesehen, dass an dem Verbindungsabschnitt des Gehäusekörpers beabstandet zueinander eine Mehrzahl von Gehäuseanlagekeilen vorgesehen ist. Zwischen benachbarten Gehäuseanlagekeilen ist dabei eine Aufnahmenut für einen korrespondierend gestalteten Verbindungsanlagekeil des Verbindungskörpers gebildet. Abhängig von der jeweiligen Montagesituation besteht insofern die Möglichkeit, den Verbindungsanlagekeil an einen ausgewählten, den optimalen Abstand zur Gerätewand aufweisenden Gehäuseanlagekeil festzulegen. Es ergibt sich insofern ein hohes Maß an Flexibilität. Insbesondere besteht die Möglichkeit, mit nur einer Verbindungsanordnung Anschlussklemmen an unterschiedlich starke Gerätewände festzulegen.

Weiterhin ist eine gattungsgemäße Verbindungsanordnung aus der DE 11 2012 003463 T5 bekannt.

Aufgabe der vorliegenden Erfindung ist es, eine gattungsgemäße Verbindungsanordnung derart weiterzubilden, dass sich die Herstellung vereinfacht und die Kosten der Komponenten der Verbindungsanordnung weiter sinken. Die Flexibilität in Bezug auf die unterschiedlichen Gerätewandstärken soll dabei erhalten bleiben.

Zur Lösung der Aufgabe ist die Erfindung in Verbindung mit dem Oberbegriff des Patentanspruchs 1 dadurch gekennzeichnet, dass an dem Verbindungskörper wenigstens ein erster Verbindungsanlagekeil und ein zweiter Verbindungsanlagekeil vorgesehen sind, wobei an dem ersten Verbindungsanlagekeil eine erste Anlagefläche und an dem zweiten Verbindungsanlagekeil eine zweite Anlagefläche vorgesehen sind, wobei die erste Anlagefläche und die zweite Anlagefläche mit der Montagerichtung den betragsmäßig gleichen Keilwinkel einschließen und wobei der zwischen der ersten Anlagefläche und der Montagerichtung gebildete Keilwinkel gegenüber dem zwischen der zweiten Anlagefläche und der Montagerichtung gebildeten zweiten Keilwinkel in Bezug zur Montagerichtung gespiegelt vorgesehen ist derart, dass in einer ersten Montagestellung der Verbindungskörper mit der ersten Anlagefläche an die Anlagefläche des Gehäuseanlagekeils angelegt ist und dass in einer durch Drehung des Verbindungskörpers um 180° um eine Montagedrehachse eingenommenen zweiten Montagestellung der Verbindungskörper mit der zweiten Anlagefläche an die Anlagefläche des Gehäuseanlagekeils angelegt ist.

Der besondere Vorteil der Erfindung besteht darin, dass ein Werkzeug zur Herstellung der Komponenten der Verbindungsanordnung, insbesondere des Gehäusekörpers und des Verbindungskörpers, kostengünstig bereitgestellt werden kann. Durch die geringen Werkzeugkosten sinken zugleich die Kosten für die Verbindungsanordnung beziehungsweise ihre Komponenten. Insbesondere bedarf es für die Herstellung eines Anlagekeils nur eines einfachen Auf- und Zuwerkzeugs. Zur Herstellung des Gehäusekörpers werden weniger Schieber verwendet. Gleichwohl bleibt die Flexibilität hinsichtlich der unterschiedlichen Gerätewandstärken erhalten. Die erfindungsgemäße Verbindungsanordnung kann wahlweise in einer ersten Montagestellung oder - nach Drehung des Verbindungskörpers um 180° - in einer zweiten Montagestellung an der Ausnehmung der Gerätewand festgelegt werden. Abhängig von der konstruktiven Gestaltung ergibt sich sodann die Möglichkeit, abhängig von der Drehstellung ein und dieselbe Verbindungsanordnung für unterschiedliche Gerätewandstärken zu verwenden. Die Handhabung der Verbindungsanordnung beziehungsweise ihre Montage sind extrem einfach. Jeweils wird der Verbindungskörper in die Montagerichtung an dem Verbindungsabschnitt des Gehäusekörpers angesetzt. Das entsprechende Vorgehen entspricht dem seit langem bekannten Montageablauf. Allein durch Drehung des Verbindungskörpers um 180° um eine Montagedrehachse kann zwischen der ersten Montagestellung und der zweiten Montagestellung gewechselt werden.

Korrespondierend zu der 180° Drehung um die Montagedrehachse sind die betragsmäßig gleichen Keilwinkel der Verbindungsanlagekeile vorzeichenverkehrt beziehungsweise in Bezug zur Montagerichtung gespiegelt vorgesehen. Es kann aufgrund der betragsmäßig gleichen Keilwinkel der Verbindungskörper wahlweise mit der ersten Anlagefläche oder mit der zweiten Anlagefläche in die korrespondierend gestaltete Anlagefläche des Gehäusekörpers angesetzt werden. Insbesondere kann der Keilwinkel so gewählt werden, dass sich eine Selbsthemmung ausbildet und einem unbeabsichtigten Lösen der Verbindung vorgebeugt ist.

Nach einer bevorzugten Ausführungsform der Erfindung sind an dem Verbindungskörper eine der ersten Anlagefläche funktional zugeordnete erste Klemmfläche und eine der zweiten Anlagefläche funktional zugeordnete zweite Klemmfläche vorgesehen. Ein Abstand zwischen einem Referenzpunkt der ersten Anlagefläche und der ersten Klemmfläche ist insbesondere größer als ein Abstand zwischen einem korrespondierend gewählten Referenzpunkt der zweiten Anlagefläche zur zweiten Klemmfläche. Vorteilhaft kann durch das Abstandsmaß festgelegt werden, für welche Gerätewandstärken die Verbindungsanordnung Verwendung finden kann. Die unterschiedlichen Abstandsmaße sind insofern charakteristisch für die zulässigen Gerätewandstärken. Eine in die Montagerichtung bestimmte Länge der Anlagekeile definiert zudem ein Wandstärkenintervall, welches in der ersten Montagestellung oder in der zweiten Montagestellung durch die relative Lage des Verbindungskörpers zum Gehäusekörper ausgeglichen werden kann.

Nach einer Weiterbildung der Erfindung können die geometrischen Verhältnisse am Verbindungskörper insbesondere so gewählt werden, dass in der ersten Montagestellung ein Abstand zwischen der ersten Klemmfläche des Verbindungskörpers und der an dem Anlageabschnitt des Gehäusekörpers gebildeten Klemmfläche zwischen 0,5 mm und 3,5 mm, bevorzugt zwischen 1 mm und 3 mm beträgt. In der zweiten Montagestellung kann ein Abstand zwischen der zweiten Klemmfläche des Verbindungskörpers und der an dem Anlageabschnitt des Gehäusekörpers gebildeten Klemmfläche zwischen 2,5 mm und 5,5 mm, bevorzugt zwischen 3 mm und 5 mm betragen. Insofern ist es möglich, abhängig von der Wahl der Montagestellung ein und dieselbe Verbindungsanordnung an einem Gerät mit einer Gerätewandstärke von 0,5 mm bis 5,5 mm festzulegen. Es ergibt sich insofern ein hohes Maß an Flexibilität in Bezug auf die Gerätewandstärke. Es kann nach der Erfindung insbesondere vorgesehen sein, dass die in der ersten Montagestellung abgebildeten Wandstärken und die in der zweiten Montagestellung abgebildeten Wandstärken einander ergänzen und insbesondere unmittelbar aneinander angrenzen beziehungsweise überlappend gestaltet sind. Das Verstellintervall für jede einzelne Montagestellung kann dabei insbesondere über den Keilwinkel und die in die Montagerichtung definierte Länge der beteiligten Anlagekeile bestimmt werden.

Nach einer Weiterbildung der Erfindung können die an dem Verbindungskörper vorgesehenen Anlageflächen ebenso wie die an dem Gehäusekörper vorgesehenen Anlageflächen unter einem korrespondierenden Anstellwinkel in Bezug auf eine Erstreckungsebene der zugeordneten Klemmflächen des Verbindungskörpers und des Gehäusekörpers orientiert sein. Das zusätzliche Ausbilden eines Anstellwinkels an den Anlageflächen erlaubt eine weitere Verbesserung der Festlegung des Verbindungskörpers an dem Gehäusekörper. Insbesondere kann durch eine geeignete Wahl des Anstellwinkels erreicht werden, dass im montierten Zustand der Verbindungskörper gegen den Gehäusekörper verklemmt beziehungsweise im Zuge der Montage an diesen angenähert wird. Das Vorsehen des Anstellwinkels begünstigt insofern eine stabile Festlegung der Verbindungsanordnung an der Gerätewand.

Nach einer Weiterbildung der Erfindung ist die Montagedrehachse für den Verbindungskörper im montierten Zustand in die Montagerichtung orientiert. Vorteilhaft vereinfacht sich durch die korrespondierende Anordnung die Montage. Die Bedienung der Verbindungsanordnung erfolgt insofern intuitiv und einer Fehlbedienung beziehungsweise Fehlmontage ist entgegengewirkt.

Nach einer Weiterbildung der Erfindung sind an dem Gehäusekörper und an dem Verbindungskörper auf zwei gegenüberliegenden Seiten jeweils mindestens zwei Gehäuseanlagekeile beziehungsweise Verbindungsanlagekeile vorgesehen. Die an einer gleichen Seite vorgesehenen Anlagekeile sind dabei zueinander beabstandet. Vorteilhaft kann durch das Vorsehen der Mehrzahl von Anlagekeilen eine Verbesserung der Festlegung erreicht werden. Die Mehrzahl der Anlagekeile kann beispielsweise symmetrisch angeordnet sein. Es ergibt sich insofern eine symmetrische Krafteinleitung beziehungsweise Abstützung, welche unter Festigkeitsgesichtspunkten vorteilhaft ist.

Nach einer Weiterbildung der Erfindung ist eine Rastverbindung vorgesehen, über die der Verbindungskörper in der ersten Montagestellung beziehungsweise in der zweiten Montagestellung mit dem Gehäusekörper verbunden ist. Als Teil der Rastverbindung sind insbesondere ein elastisch vorgesehenes Rastelement und eine Rastaufnahme für das Rastelement vorgesehen. Zum Festlegen des Verbindungskörpers an dem Gehäusekörper greift das Rastelement in die Rastaufnahme ein. Vorteilhaft ergibt sich durch das Vorsehen der Rastverbindung eine formschlüssige Festlegung des Verbindungskörpers an dem Gehäusekörper. Einem unbeabsichtigten Lösen der Verbindungsanordnung ist demzufolge entgegengewirkt.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Die Zeichnungen dienen lediglich beispielhaft der Klarstellung der Erfindung und haben keinen einschränkenden Charakter.

Anhand der beigefügten Zeichnungen wird die Erfindung nachfolgend näher erläutert. Dabei zeigen:
- Figur 1: eine perspektivische Ansicht eines Gehäusekörpers einer erfindungsgemäßen Verbindungsanordnung,
- Figur 2: eine Seitenansicht des Gehäusekörpers nach Figur 1,
- Figur 3: eine Aufsicht auf den Gehäusekörper nach Figur 1,
- Figur 4: eine Vorderseitenansicht des Gehäusekörpers nach Figur 1,
- Figur 5: eine Detailvergrößerung eines Abschnitts X nach Figur 4,
- Figur 6: eine perspektivische Ansicht eines Verbindungskörpers der erfindungsgemäßen Verbindungsanordnung,
- Figur 7: eine Vorderseitenansicht des Verbindungskörpers nach Figur 6,
- Figur 8: eine Schnittdarstellung des Verbindungskörpers nach dem Schnitt A-A gemäß Figur 7,
- Figur 9: eine Montagesituation der erfindungsgemäßen Verbindungsanordnung in einer Seitenansicht,
- Figur 10: eine Schnittdarstellung durch die Verbindungsanordnung nach dem Schnitt B-B gemäß Figur 9,
- Figur 11: eine Detailvergrößerung eines Abschnitts Y nach Figur 10,
- Figur 12: eine Vorderseitenansicht der montierten Verbindungsanordnung nach Figur 9,
- Figur 13: eine Detailvergrößerung des Abschnitts Z nach Figur 12,
- Figur 14: eine erste Montagesituation für die erfindungsgemäße Verbindungsanordnung,
- Figur 15: eine zweite Montagesituation für die erfindungsgemäße Verbindungsanordnung,
- Figur 16: eine dritte Montagesituation für die erfindungsgemäße Verbindungsanordnung und
- Figur 17: eine vierte Montagesituation für die erfindungsgemäße Verbindungsanordnung.

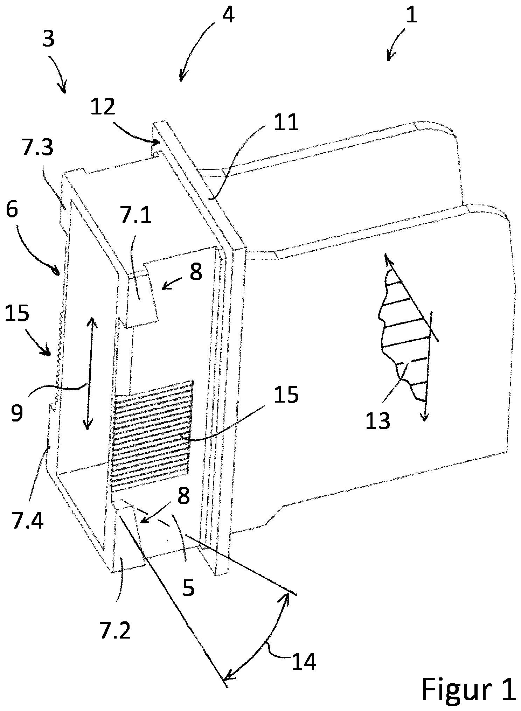

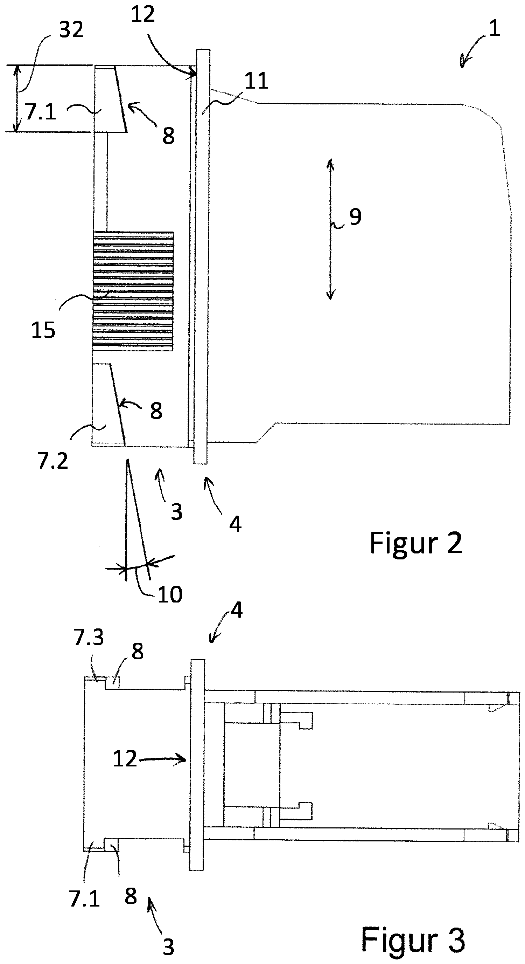

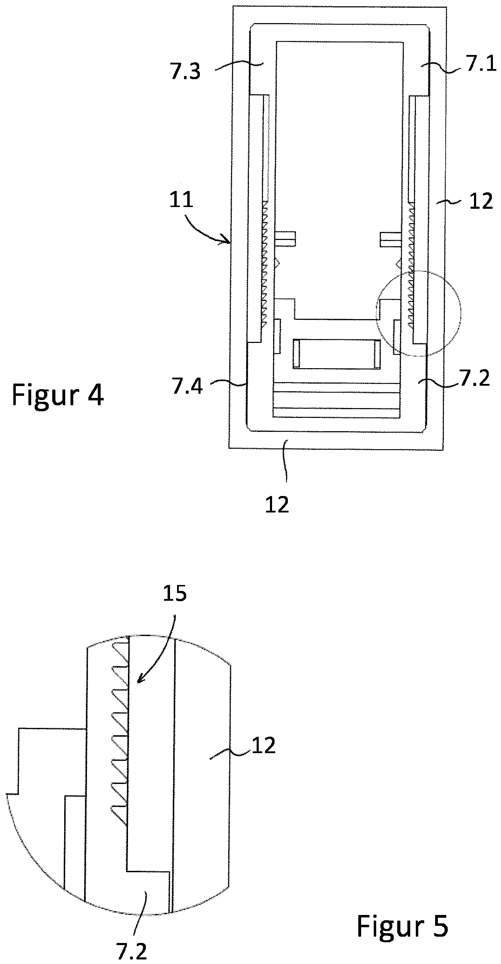

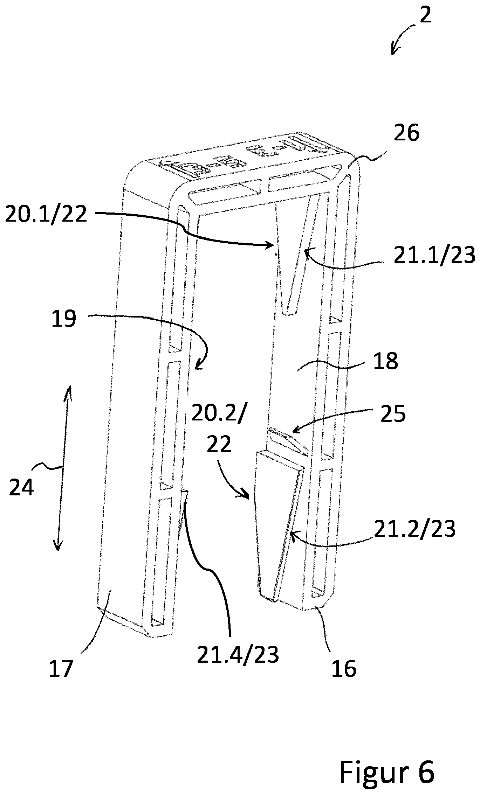

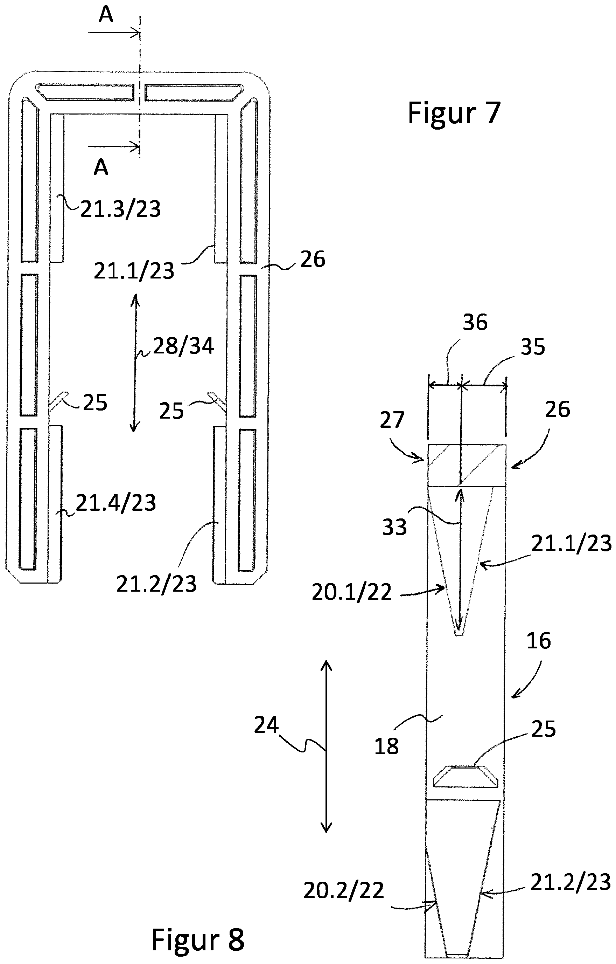

Eine erfindungsgemäße Verbindungsanordnung umfasst einen Gehäusekörper 1 nach den Figuren 1 bis 5 sowie einen Verbindungskörper 2 nach den Figuren 6 bis 8. Die erfindungsgemäße Verbindungsanordnung wird beispielsweise an einer Gerätewand eines nicht dargestellten Geräts montiert. Die Verbindungsanordnung dient beispielsweise dazu, eine Anschlussklemme an der Gerätewand festzulegen.

Der Gehäusekörper 1 sieht einen Verbindungsabschnitt 3 und einen am Verbindungsabschnitt 3 angrenzenden Anlageabschnitt 4 vor. Der Verbindungsabschnitt 3 besitzt einen im Wesentlichen rechteckigen Querschnitt mit zwei einander gegenüberliegenden Mantelseitenflächen 5, 6. An den gegenüberliegenden Mantelseitenflächen 5, 6 sind jeweils beabstandet zueinander zwei Gehäuseanlagekeile 7.1, 7.2, 7.3, 7.4 vorgesehen. Die Mantelseiten 5, 6 definieren zwei gegenüberliegende Längsseiten des Verbindungsabschnitts 3. An jedem Gehäuseanlagekeil 7.1, 7.2, 7.3, 7.4 ist eine dem Anlageabschnitt 4 des Gehäusekörpers 1 zugewandte Anlagefläche 8 vorgesehen. In Bezug auf eine durch die Längsseiten 5, 6 definierte Längsrichtung 9 der Längsseiten 5, 6 sind die Gehäuseanlagekeile 7.1, 7.2, 7.3, 7.4 beziehungsweise die an den Gehäuseanlagekeilen 7.1, 7.2, 7.3, 7.4 ausgebildeten Anlageflächen 8 unter einem Keilwinkel 10 orientiert. Der Keilwinkel 10 beträgt im vorliegenden Ausführungsbeispiel der Erfindung etwa 10°.

Der Anlageabschnitt 4 des Gehäusekörpers 1 weist einen den Verbindungabschnitt 3 mantelseitig einfassenden Kragen 11 auf. Im Bereich des Kragens 11 ist angrenzend an den Verbindungsabschnitt 3 eine der Anlageflächen 8 der Gehäuseanlagekeile 7.1, 7.2, 7.3, 7.4 zugewandte Klemmfläche 12 ausgebildet. Die Klemmfläche 12 ist eben und plan. Sie definiert eine Erstreckungsebene 13 des Anlageabschnitts 4.

Der Schrägstellung der Anlageflächen 8 unter dem Keilwinkel 10 ist eine weitere Schrägstellung überlagert. In Bezug auf die Erstreckungsebene 13 sind die Anlageflächen 8 der Gehäuseanlagekeile 7.1, 7.2, 7.3, 7.4 zusätzlich unter dem Anstellwinkel 14 geneigt angeordnet. Der Anstellwinkel 14 definiert einen Hinterschnitt und beträgt vorliegend etwa 30°.

Zwischen zwei einer gleichen Mantelseitenfläche 5, 6 des Verbindungabschnitts 3 zugeordneten Gehäuseanlagekeilen 7.1, 7.2, 7.3, 7.4 ist eine Rastaufnahme 15 vorgesehen. Die Rastaufnahme 15 weist eine regelmäßige, prismenartige Oberflächenstruktur auf. Insbesondere ist die prismenartige Oberflächenstruktur der Rastaufnahme vorliegend sägezahnartig konturiert.

Der Verbindungskörper 2 der erfindungsgemäßen Verbindungsanordnung ist insbesondere U-förmig ausgebildet. Zwei einander gegenüberliegende freie Schenkel 16, 17 des Verbindungskörpers 2 sind langgestreckt ausgebildet und insbesondere biegeeleatisch. Auf einander gegenüberliegenden Innenseiten 18, 19 sind an den freien Schenkeln 16, 17 des Verbindungskörpers 2 pfeilspitzenartige Ausformungen vorgesehen, welche jeweils einen ersten Verbindungsanlagekeil 20.1, 20.2, 20.3, 20.4 und einen zweiten Verbindungsanlagekeil 21.1, 21.2, 21.3, 21.4 definieren. An den Verbindungsanlagekeilen 20.1, 20.2, 20.3, 20.4, 21.1, 21.2, 21.3, 21.4 des Verbindungskörpers 2 sind erste Anlageflächen 22 und zweite Anlageflächen 23 gebildet. In Bezug auf eine durch die längserstreckten freien Schenkel 16, 17 definierte Längsrichtung 24 des Verbindungskörpers 2 sind die ersten Anlageflächen 22 und die zweiten Anlageflächen 23 unter dem betragsmäßigen Keilwinkel 10 angestellt. Die Neigung der ersten Anlageflächen 22 und der zweiten Anlageflächen 23 ist jedoch in Bezug auf die Längsrichtung 24 gespiegelt beziehungsweise vorzeichenverkehrt realisiert, so dass sich die Pfeilspitzenform der Ausformung ergibt.

An jeder Innenseite 18, 19 der freien Schenkel 16, 17 sind jeweils zwei Ausformungen, welche den ersten Verbindungsanlagekeil 20.1, 20.2, 20.3,20.4 und den zweiten Verbindungsanlagekeil 21.1, 21.2, 21.3, 21.4 definieren, beabstandet zueinander vorgesehen. Zwischen den zwei Ausformungen, welche an einer gemeinsamen Innenseite 18, 19 vorgesehen sind, ist je ein Rastelement 25 vorgesehen. Das Rastelement 25 ragt in Richtung der gegenüberliegenden Innenseiten 18, 19 von den freien Schenkeln 16, 17 ab. Es ist geometrisch so gestaltet, dass das Rastelement 25 in einem montierten Zustand der Verbindungsanordnung in die Rastaufnahme 15 eingreift, welche im Bereich des Verbindungsabschnitts 3 an dem Gehäusekörper 1 vorgesehen ist.

Gegenüberliegende Stirnseiten 26, 27 des Verbindungskörpers 2 definieren eine erste Klemmfläche sowie eine zweite Klemmfläche des Verbindungskörpers 2. Die Klemmflächen 26, 27 sind eben ausgebildet. Die erste Klemmfläche 26 ist dabei funktional den ersten Verbindungsanlagekeilen 20.1, 20.2, 20.3,20.4 mit der ersten Anlagefläche 22 zugeordnet. Die zweite Klemmfläche 27 ist funktional den zweiten Verbindungsanlagekeilen 21.1, 21.2, 21.3, 21.4 mit der zweiten Anlagefläche 23 zugeordnet. Ein minimaler Abstand 35 zwischen der ersten Anlagefläche 22 und der ersten Klemmfläche 26 ist dabei größer als ein minimaler Abstand 36 zwischen der ersten Anlagefläche 23 und der zweiten Klemmfläche 27. Die Abstandsmaße sind dabei bezogen auf ein gemeinsamen, zwischen den Verbindungsanlagekeilen 20.1, 20.2, 20.3,20.4, 21.1, 21.2, 21.3, 21.4 gebildeten Referenzpunkt und quer zu der Längsrichtung 24 bestimmt.

Der Verbindungskörper 2 ist in Bezug auf eine in die Längsrichtung 24 erstreckte Längsmittelachse 28 symmetrisch ausgebildet.

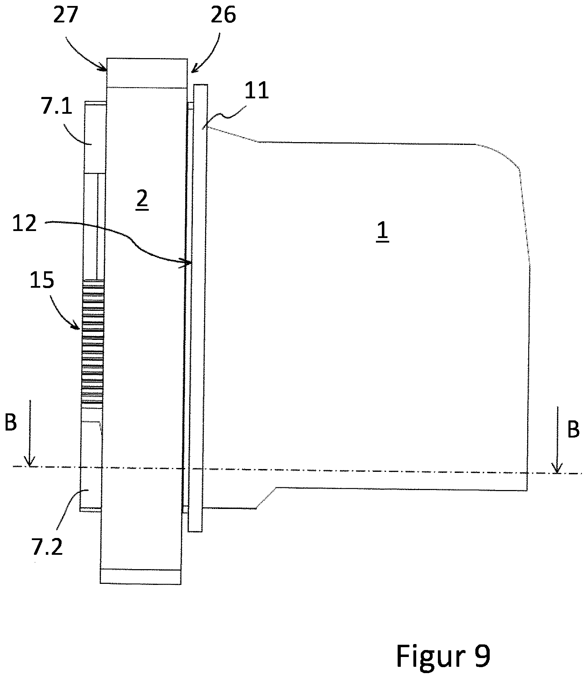

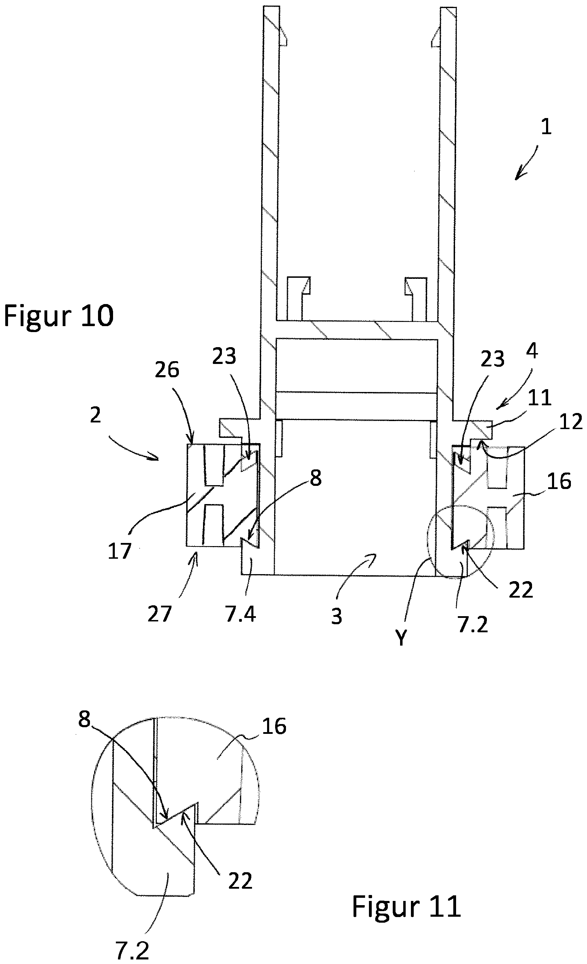

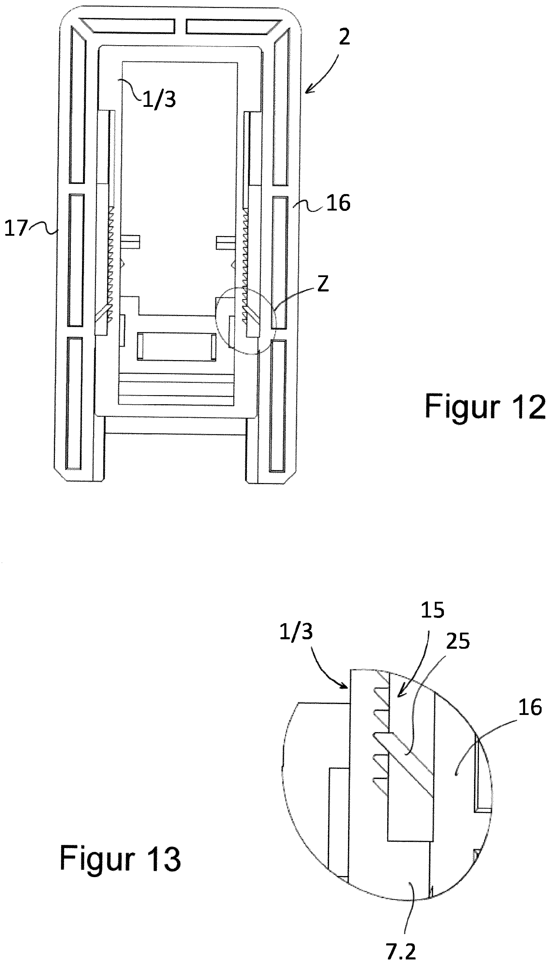

Die Figuren 9 bis 13 zeigen die erfindungsgemäße Verbindungsanordnung in dem montierten Zustand. Hierbei ist der Verbindungskörper 2 im Bereich des Verbindungsabschnitts 3 an dem Gehäusekörper 1 angesetzt. Die freien Schenkel 16, 17 liegen hierbei jedenfalls abschnittsweise mit den einander zugewandten Innenseiten 18, 19 an den Mantelseitenflächen 5, 6 an. Die Montage erfolgt, indem der U-förmige Verbindungskörper 2 in einer Montagerichtung 29 an den Gehäusekörper 1 angesetzt wird. In Zuge der Montage legen sich hierbei die Anlageflächen 8 des Gehäusekörpers an die ersten Anlageflächen 22 des Verbindungskörpers 2 an. Dabei wird während der Montage infolge der unter dem Klemmwinkel 10 angestellten Anlage der Anlageflächen 8, 22, der Verbindungskörper 2 mit der ersten Klemmfläche 26 der an dem Anlageabschnitt 4 des Gehäusekörpers 1 gebildeten Klemmfläche 12 angenähert. Eine in der vorliegenden Wiedergabe nicht dargestellte Gehäusewandung kann in Folge deren zwischen den einander gegenüberliegenden Klemmflächen 12, 26 festgelegt wird.

Aufgrund des an den Anlageflächen 8, 22 ausgebildeten Hinterschnitts (Anstellwinkel 14) legen sich die freien Schenkel 16, 17 des Verbindungskörpers 2 an die Mantelseitenflächen 5, 6 des Gehäusekörpers 1 an. Es ergibt sich insofern eine besonderes vorteilhafte Festlegung beziehungsweise Klemmung der Gerätewand zwischen den Klemmflächen 12, 26. In dem montierten Zustand ergibt sich eine formschlüssige Festlegung des Verbindungskörpers 2 an dem Gehäusekörper 1 überdies durch die Rastverbindung, welche durch die Rastaufnahme 15 und das elastisch vorgesehene Rastelement 25 gebildet ist. Das Rastelement 25 greift dabei wieder hackenartig in die Oberflächenstruktur der Rastaufnahme 15 ein und verhindert, dass der Verbindungskörper 2 ungewollt gegen die Montagerichtung 29 sich verschiebt.

In analoger Weise kann der Verbindungskörper 2 um 180° in Bezug auf eine Montagedrehachse 34 gedreht werden. Die Montagedrehachse 34 fällt beim vorliegenden Ausführungsbeispiel der Erfindung mit der Längsmittelachse 28 des Verbindungskörpers 2 zusammen. Durch die Rotation des Verbindungskörpers 2 um die Montagedrehachse 34 liegen die zweiten Anlageflächen 23 des Verbindungskörpers 2 an den Anlageflächen 8 des Gehäusekörpers 1 an. Eine Klemmung einer Gerätewand erfolgt dann zwischen der Klemmfläche 12 des Gehäusekörpers 1 und der zweiten Klemmfläche 27 des Verbindungskörpers 2.

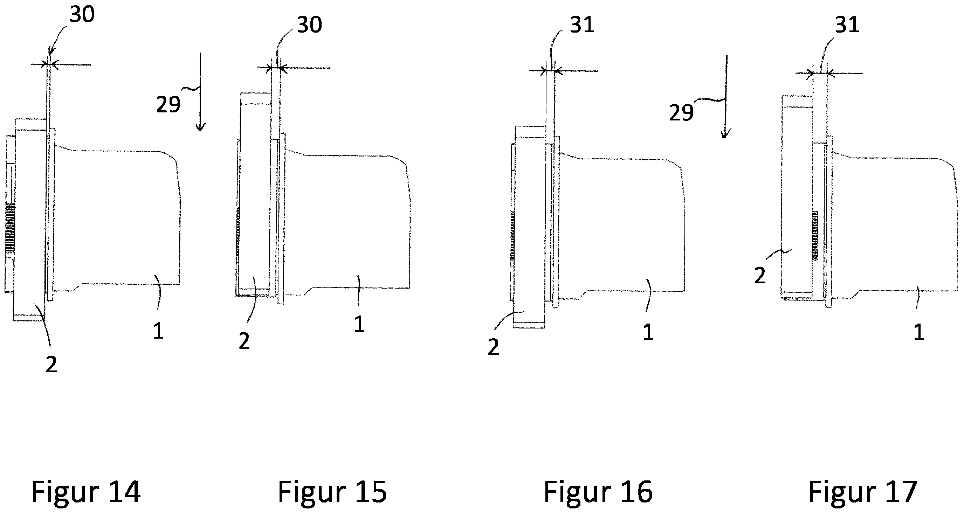

Unterschiedliche Montagesituationen der erfindungsgemäßen Verbindungsanordnung sind in den Figuren 14 bis 17 dargestellt. Insbesondere wird hierbei deutlich, dass ein und dieselbe Verbindungsanordnung sich an Geräte mit sehr unterschiedlicher Gerätewandstärke ansetzen lässt.

Figur 14 zeigt die Verbindungsanordnung in einer ersten Montagestellung. Es ist hierbei die erste Klemmfläche 26 des Verbindungskörpers 2 gegenüberliegend zu der Klemmfläche 12 des Gehäusekörpers 1 vorgesehen. Insofern wird eine nicht dargestellte Gerätewand zwischen der ersten Klemmfläche 26 des Verbindungskörpers 2 und der Klemmfläche 12 des Gehäusekörpers 1 festgelegt. Ein Abstand 30 der Klemmflächen 12, 26 beträgt vorliegend etwa 1 mm.

Figur 15 zeigt die Verbindungsanordnung in der gleichen Montagestellung. Wieder ist die erste Klemmfläche 26 des Verbindungskörpers 2 der Klemmfläche 12 des Gehäusekörpers 1 zugewandt. Jedoch ist ein Abstand der Klemmflächen 12, 26 zueinander größer. Vorliegend beträgt der Abstand zirka 3 mm.

Die Montagesituationen nach den Figuren 14 und 15 unterscheiden sich insbesondere durch die relative Zuordnung des Verbindungskörpers 2 zum Gehäusekörper 1. Dabei ist der unterschiedliche Abstand 30 definiert durch eine Länge 32, 33 der Anlagekeile 7.1, 7.2, 7.3, 7.4, 20.1, 20.2, 20.3, 20.4 und der Größe des Keilwinkels 10.

Eine dritte Montagesituation nach Figur 16 sieht den Verbindungskörper 2 in einer um 180° in Bezug zu der ersten Montagestellung gedrehten zweiten Montagestellung vor. Der Verbindungskörper 2 ist dabei um die Montagedrehachse 34 verdreht, so dass die zweite Klemmfläche 27 des Verbindungskörpers 2 der Klemmfläche 12 des Gehäusekörpers 1 zugeordnet ist. Ein Abstand 33 der zweiten Klemmfläche 27 des Verbindungskörpers 2 von der Klemmfläche 12 des Gehäusekörpers 1 beträgt etwa 3 mm.

In der vierten Montagesituation gemäß Figur 17 ist der Verbindungskörper wieder in der zweiten Montagstellung vorgesehen. Aufgrund der unterschiedlichen relativen Lage des Verbindungskörpers 2 zum Gehäusekörper 1 beträgt der Abstand der einander zugewandten Klemmflächen 12, 27 vorliegend jedoch zirka 5 mm.

In der zweiten Montagestellung nach den Figuren 16 und 17 ist die zweite Anlagefläche 23, welche an den zweiten Verbindungsanlagekeilen 21.1, 21.2, 21.3, 21.4 des Verbindungskörpers 2 gebildet ist, an die Anlageflächen 8 der Gehäuseanlagekeile 7.1, 7.2, 7.3, 7.4 angelegt.

Gleiche Bauteile und Bauteilfunktionen sind durch gleiche Bezugszeichen gekennzeichnet.

### Bezugszeichenliste

- 1: Gehäusekörper
- 2: Verbindungskörper
- 3: Verbindungsabschnitt
- 4: Anlageabschnitt
- 5: Mantelseitenfläche
- 6: Mantelseitenfläche
- 7.1: Gehäuseanlagekeil
- 7.2: Gehäuseanlagekeil
- 7.3: Gehäuseanlagekeil
- 7.4: Gehäuseanlagekeil
- 8: Anlagefläche
- 9: Längsrichtung
- 10: Keilwinkel
- 11: Kragen
- 12: Klemmfläche
- 13: Erstreckungsebene
- 14: Anstellwinkel
- 15: Rastaufnahme
- 16: freier Schenkel
- 17: freier Schenkel
- 18: Innenseite
- 19: Innenseite
- 20.1: erster Verbindungsanlagekeil
- 20.2: erster Verbindungsanlagekeil
- 20.3: erster Verbindungsanlagekeil
- 20.4: erster Verbindungsanlagekeil
- 21.1: zweiter Verbindungsanlagekeil
- 21.2: zweiter Verbindungsanlagekeil
- 21.3: zweiter Verbindungsanlagekeil
- 21.4: zweiter Verbindungsanlagekeil
- 22: erste Anlagefläche
- 23: zweite Anlagefläche
- 24: Längsrichtung
- 25: Rastelement
- 26: erste Klemmfläche
- 27: zweite Klemmfläche
- 28: Längsmittelachse
- 29: Montagerichtung
- 30: Abstand
- 31: Abstand
- 32: Länge
- 33: Länge
- 34: Montagedrehachse
- 35: minimaler Abstand
- 36: minimaler Abstand

## Patentansprüche

1. Verbindungsanordnung umfassend einen Gehäusekörper (1) mit einem Verbindungsabschnitt (3), an dem auf zwei gegenüberliegenden Seiten (5, 6) jeweils mindestens ein Gehäuseanlagekeil (7.1, 7.2, 7.3, 7.4) mit einer unter einem Keilwinkel (10) zu einer Montagerichtung (29) orientierten Anlagefläche (8) ausgebildet ist, und mit einem Anlageabschnitt (4), wobei eine an dem Anlageabschnitt (4) gebildete Klemmfläche (12) beabstandet zu der Anlagefläche (8) des mindestens einem Gehäuseanlagekeils (7.1, 7.2, 7.3, 7.4) vorgesehen ist, und umfassend einen im Bereich des Verbindungsabschnitts (3) an den Gehäusekörper (1) ansetzbaren Verbindungskörper (2), an dem mindestens ein Verbindungsanlagekeil (20.1, 20.2, 20.3, 20.4) vorgesehen ist, welcher eine unter dem gleichen Keilwinkel (10) zu der Montagerichtung (29) orientierte Anlagefläche (22) aufweist, wobei in einem montierten Zustand die Anlageflächen (8, 22) des Gehäuseanlagekeils (7.1, 7.2, 7.3, 7.4) und des Verbindungsanlagekeils (20.1, 20.2, 20.3, 20.4) einander berühren, **dadurch gekennzeichnet, dass** an dem Verbindungskörper (2) wenigstens ein erster Verbindungsanlagekeil (20.1, 20.2, 20.3, 20.4) und ein zweiter Verbindungsanlagekeil (21.1, 21.2, 21.3, 21.4) vorgesehen sind, wobei an dem ersten Verbindungsanlagekeil (20.1, 20.2, 20.3, 20.4) eine erste Anlagefläche (22) und an dem zweiten Verbindungsanlagekeil (21.1, 21.2, 21.3, 21.4) eine zweite Anlagefläche (23) vorgesehen sind, wobei die erste Anlagefläche (22) und die zweite Anlagefläche (23) mit der Montagerichtung (29) den betragsmäßig gleichen Keilwinkel (10) einschließen und wobei der zwischen der ersten Anlagefläche (22) und der Montagerichtung (29) gebildete Keilwinkel (10) gegenüber dem zwischen der zweiten Anlagefläche (23) und der Montagerichtung (29) gebildeten zweiten Keilwinkel (10) in Bezug zur Montagerichtung (29) gespiegelt vorgesehen ist derart, dass in einer ersten Montagestellung der Verbindungskörper (2) mit der ersten Anlagefläche (22) an die Anlagefläche (8) des Gehäuseanlagekeils (7.1, 7.2, 7.3, 7.4) angelegt ist und dass in einer durch Drehung des Verbindungskörpers (2) um 180° um eine Montagedrehachse (34) eingenommenen zweiten Montagestellung der Verbindungskörper (2) mit der zweiten Anlagefläche (23) an die Anlagefläche (8) des Gehäuseanlagekeils (7.1, 7.2, 7.3, 7.4) angelegt ist.

2. Verbindungsanordnung nach Anspruch 1, **dadurch gekennzeichnet, dass** an dem Verbindungskörper (2) eine der ersten Anlagefläche (22) funktional zugeordnete erste Klemmfläche (26) und eine der zweiten Anlagefläche (23) funktional zugeordnete zweite Klemmfläche (27) vorgesehen sind, wobei in dem montierten Zustand die erste Klemmfläche (26) oder die zweite Klemmfläche (27) des Verbindungskörpers (2) der an dem Anlageschnitt (4) des Gehäusekörpers (1) vorgesehene Klemmfläche (12) zugewandt ist und wobei ein quer zu der Montagerichtung (29) bestimmter minimaler Abstand (35) der ersten Anlagefläche (22) von der ersten Klemmfläche (26) des Verbindungskörpers (2) größer ist als ein quer zu der Montagerichtung (29) bestimmter minimaler Abstand (35) der zweiten Anlagefläche (23) von der zweiten Klemmfläche (27) des Verbindungskörpers (2), und/oder dass die erste Klemmfläche (26) und die zweite Klemmfläche (27) einander gegenüberliegende Stirnseiten des Verbindungskörpers (2) definieren.

3. Verbindungsanordnung nach Anspruch 1 oder 2, **dadurch gekennzeichnet, dass** ein quer zu der Montagerichtung (29) bestimmter Abstand (30) der an dem Anlageabschnitt (4) des Gehäusekörpers (1) gebildeten Klemmfläche (12) zur ersten Klemmfläche (26) des Verbindungskörpers (2) in der ersten Montagestellung zwischen 0,5 mm und 3,5 mm, bevorzugt zwischen 1 mm und 3 mm beträgt, und dass ein quer zu der Montagerichtung (29) bestimmter Abstand (31) zwischen der zweiten Klemmfläche (27) des Verbindungskörpers (2) und der an der Anlageabschnitt (4) des Gehäusekörpers (1) gebildeten Klemmfläche (12) in der zweiten Montagestellung zwischen 2,5 mm und 5,5 mm, bevorzugt zwischen 3 mm und 5 mm beträgt.

4. Verbindungsanordnung nach einem der Ansprüche 1 bis 3, **dadurch gekennzeichnet, dass** die an dem Verbindungskörper (2) gebildeten Anlageflächen (22, 23) und die an dem Gehäusekörper (1) gebildeten Anlageflächen (8) unter einem korrespondierenden Anstellwinkel (14) zu einer Erstreckungsebene (13) der zugeordneten Klemmflächen (12, 26, 27) des Verbindungskörpers (2) und des Gehäusekörpers (1) orientiert sind.

5. Verbindungsanordnung nach einem der Ansprüche 1 bis 4, **dadurch gekennzeichnet, dass** an dem Verbindungskörper (2) gegenüberliegend einander paarweise zugeordnete Verbindungsanlagekeile (20.1, 20.2, 20.3, 20.4, 21.1, 21.2, 21.3, 21.4) vorgesehen sind, wobei die Verbindungsanlagekeile (20.1, 20.2, 20.3, 20.4, 21.1, 21.2, 21.3, 21.4) symmetrisch in Bezug auf die Montagedrehachse (34) des Verbindungskörpers (2) orientiert sind.

6. Verbindungsanordnung nach einem der Ansprüche 1 bis 5, **dadurch gekennzeichnet, dass** an dem Gehäusekörper (1) und/oder an dem Verbindungskörper (2) auf zwei gegenüberliegenden Seiten (5, 6, 18, 19) jeweils mindestens zwei Gehäuseanlagekeile (7.1, 7.2, 7.3, 7.4) und/oder Verbindungsanlagekeile(20.1, 20.2, 20.3, 20.4, 21.1, 21.2, 21.3, 21.4) gebildet sind, wobei die auf einer gleichen Seite vorgesehene Anlagekeile (7.1, 7.2, 7.3, 7.4, 20.1, 20.2, 20.3, 20.4, 21.1, 21.2, 21.3, 21.4) jeweils in eine Längsrichtung (9, 24) des Gehäusekörpers (1) und/oder des Verbindungskörper (2) beabstandet zueinander vorgesehen sind.

7. Verbindungsanordnung nach einem der Ansprüche 1 bis 6, **dadurch gekennzeichnet, dass** zum Festlegen des Verbindungskörpers (2) an den Verbindungsabschnitt (3) des Gehäusekörpers (1) in der ersten Montagestellung und/oder in der zweiten Montagestellung eine Rastverbindung vorgesehen ist, wobei als Teil der Rastverbindung ein elastisches Rastelement (25) und eine Rastaufnahme (15) vorgesehen sind, welche einander in der ersten Montagestellung und/oder in der zweiten Montagestellung derart zugewandt sind, dass das elastisch ausgebildetes Rastelement (25) in die Rastaufnahme (15) eingreift.

8. Verbindungsanordnung nach einem der Ansprüche 1 bis 7, **dadurch gekennzeichnet, dass** der Verbindungskörper (2) U-förmig ausgebildet ist, wobei zwei freie Schenkel (16, 17) des Verbindungskörpers (2) biegeelastisch ausgeführt sind und wobei an gegenüberliegenden Innenseiten (18, 19) der freien Schenkel (16, 17) jeweils mindestens ein erster Verbindungsanlagekeil (20.1, 20.2, 20.3, 20.4) und ein zweiter Verbindungsanlagekeil 821.1, 21.2, 21.3, 21.4) vorgesehen sind.

9. Verbindungsanordnung nach einem der Ansprüche 1 bis 8, **dadurch gekennzeichnet, dass** die Montagedrehachse (34) in die Montagerichtung (29) orientiert ist und/oder dass die Montagedrehachse (34) eine Symmetrieachse des Verbindungskörpers (2) definiert.

## Claims

1. Connecting arrangement comprising a housing body (1) having a connecting section (3), at least one housing contact wedge (7.1, 7.2, 7.3, 7.4) with a contact face (8) which is oriented at a wedge angle (10) to a mounting direction (29) being formed on each of the two opposite sides (5, 6) of the said connecting section, and having a contact section (4), wherein a clamping face (12) which is formed on the contact section (4) is provided at a distance from the contact face (8) of the at least one housing contact wedge (7.1, 7.2, 7.3, 7.4), and comprising a connecting body (2) which can be attached to the housing body (1) in the region of the connecting section (3) and on which at least one connecting contact wedge (20.1, 20.2, 20.3, 20.4) is provided, which connecting contact wedge has a contact face (22) which is oriented at the same wedge angle (10) to the mounting direction (29), wherein, in a mounted state, the contact faces (8, 22) of the housing contact wedge (7.1, 7.2, 7.3, 7.4) and of the connecting contact wedge (20.1, 20.2, 20.3, 20.4) are in contact with one another, **characterized in that** at least one first connecting contact wedge (20.1, 20.2, 20.3, 20.4) and one second connecting contact wedge (21.1, 21.2, 21.3, 21.4) are provided on the connecting body (2), wherein a first contact face (22) is provided on the first connecting contact wedge (20.1, 20.2, 20.3, 20.4) and a second contact face (23) is provided on the second connecting contact wedge (21.1, 21.2, 21.3, 21.4), wherein the first contact face (22) and the second contact face (23) enclose a wedge angle (10) of the same magnitude with the mounting direction (29), and wherein the wedge angle (10) which is formed between the first contact face (22) and the mounting direction (29) is provided in a mirror-image with respect to the mounting direction (29) in relation to the second wedge angle (10) which is formed between the second contact face (23) and the mounting direction (29) in such a way that, in a first mounting position, the connecting body (2) is placed against the contact face (8) of the housing contact wedge (7.1, 7.2, 7.3, 7.4) by way of the first contact face (22), and that, in a second mounting position which is assumed by virtue of rotation of the connecting body (2) through 180° about a mounting rotation axis (34), the connecting body (2) is placed against the contact face (8) of the housing contact wedge (7.1, 7.2, 7.3, 7.4) by way of the second contact face (23).

2. Connecting arrangement according to Claim 1, **characterized in that** a first clamping face (26) which is functionally associated with the first contact face (22) and a second clamping face (27) which is functionally associated with the second contact face (23) are provided on the connecting body (2), wherein, in the mounted state, the first clamping face (26) or the second clamping face (27) of the connecting body (2) faces the clamping face (12) which is provided on the contact cut (4) of the housing body (1), and wherein a minimum distance (35), which is specified transversely to the mounting direction (29), of the first contact face (22) from the first clamping face (26) of the connecting body (2) is greater than a minimum distance (35), which is specified transversely to the mounting direction (29), of the second contact face (23) from the second clamping face (27) of the connecting body (2), and/or **in that** the first clamping face (26) and the second clamping face (27) define mutually opposite end sides of the connecting body (2).

3. Connecting arrangement according to Claim 1 or 2, **characterized in that** a distance (30), which is specified transversely to the mounting direction (29), of the clamping face (12) which is formed on the contact section (4) of the housing body (1) to the first clamping face (26) of the connecting body (2) in the first mounting position is between 0.5 mm and 3.5 mm, preferably between 1 mm and 3 mm, and **in that** a distance (31), which is specified transversely to the mounting direction (29), between the second clamping face (27) of the connecting body (2) and the clamping face (12) which is formed on the contact section (4) of the housing body (1) in the second mounting position is between 2.5 mm and 5.5 mm, preferably between 3 mm and 5 mm.

4. Connecting arrangement according to one of Claims 1 to 3, **characterized in that** the contact faces (22, 23) which are formed on the connecting body (2) and the contact faces (8) which are formed on the housing body (1) are oriented at a corresponding setting angle (14) to a plane (13) of extent of the associated clamping faces (12, 26, 27) of the connecting body (2) and of the housing body (1).

5. Connecting arrangement according to one of Claims 1 to 4, **characterized in that** connecting contact wedges (20.1, 20.2, 20.3, 20.4, 21.1, 21.2, 21.3, 21.4) which are associated with one another such that they are situated opposite one another in pairs are provided on the connecting body (2), wherein the connecting contact wedges (20.1, 20.2, 20.3, 20.4, 21.1, 21.2, 21.3, 21.4) are oriented symmetrically with respect to the mounting rotation axis (34) of the connecting body (2).

6. Connecting arrangement according to one of Claims 1 to 5, **characterized in that** in each case at least two housing contact wedges (7.1, 7.2, 7.3, 7.4) and/or connecting contact wedges (20.1, 20.2, 20.3, 20.4, 21.1, 21.2, 21.3, 21.4) are formed on the housing body (1) and/or on the connecting body (2) on two opposite sides (5, 6, 18, 19), wherein the contact wedges (7.1, 7.2, 7.3, 7.4, 20.1, 20.2, 20.3, 20.4, 21.1, 21.2, 21.3, 21.4) which are provided on the same side are each provided at a distance from one another in a longitudinal direction (9, 24) of the housing body (1) and/or of the connecting body (2).

7. Connecting arrangement according to one of Claims 1 to 6, **characterized in that** a latching connection is provided for the purpose of securing the connecting body (2) to the connecting section (3) of the housing body (1) in the first mounting position and/or in the second mounting position, wherein an elastic latching element (25) and a latching recess (15) are provided as part of the latching connection, which latching element and latching receptacle face one another in the first mounting position and/or in the second mounting position in such a way that the latching element (25) of elastic design engages into the latching receptacle (15).

8. Connecting arrangement according to one of Claims 1 to 7, **characterized in that** the connecting body (2) is of U-shaped design, wherein two free limbs (16, 17) of the connecting body (2) are of flexurally elastic design, and wherein in each case at least one first connecting contact wedge (20.1, 20.2, 20.3, 20.4) and one second connecting contact wedge 821.1, 21.2, 21.3, 21.4) are provided on opposite inner sides (18, 19) of the free limbs (16, 17).

9. Connecting arrangement according to one of Claims 1 to 8, **characterized in that** the mounting rotation axis (34) is oriented in the mounting direction (29), and/or **in that** the mounting rotation axis (34) defines an axis of symmetry of the connecting body (2).

## Revendications

1. Dispositif de liaison comprenant un corps de boîtier (1) avec une partie de liaison (3), sur laquelle au moins un coin d'appui de boîtier (7.1, 7.2, 7.3, 7.4) avec une face d'appui (8) orientée sous un angle de coin (10) par rapport à une direction de montage (29) est formé respectivement sur deux côtés opposés (5, 6), et avec une partie d'appui (4), dans lequel il est prévu une face de serrage (12) formée sur la partie d'appui (4) à distance de la face d'appui (8) dudit au moins un coin d'appui de boîtier (7.1, 7.2, 7.3, 7.4), et comprenant un corps de liaison (2) applicable sur le corps de boîtier (1) dans la région de la partie de liaison (3), sur lequel il est prévu au moins un coin d'appui de liaison (20.1, 20.2, 20.3, 20.4), qui présente une face d'appui (22) orientée sous le même angle de coin (10) par rapport à la direction de montage (29), dans lequel dans un état monté les faces d'appui (8, 22) du coin d'appui de boîtier (7.1, 7.2, 7.3, 7.4) et du coin d'appui de liaison (20.1, 20.2, 20.3, 20.4) se touchent mutuellement, **caractérisé en ce qu'**il est prévu sur le corps de liaison (2) au moins un premier coin d'appui de liaison (20.1, 20.2, 20.3, 20.4) et un second coin d'appui de liaison (21.1, 21.2, 21.3, 21.4), dans lequel il est prévu sur le premier coin d'appui de liaison (20.1, 20.2, 20.3, 20.4) une première face d'appui (22) et sur le second coin d'appui de liaison (21.1, 21.2, 21.3, 21.4) une seconde face d'appui (23), dans lequel la première face d'appui (22) et la seconde face d'appui (23) forment l'angle de coin de même valeur (10) avec la direction de montage (29) et dans lequel l'angle de coin (10) formé entre la première face d'appui (22) et la direction de montage (29) est prévu en position réfléchie par rapport à la direction de montage (29) par rapport au second angle de coin (10) formé entre la seconde face d'appui (23) et la direction de montage (29), de telle manière que dans une première position de montage le corps de liaison (2) soit posé avec la première face d'appui (22) sur la face d'appui (8) du coin d'appui de boîtier (7.1, 7.2, 7.3, 7.4) et que dans une seconde position de montage occupée par rotation du corps de liaison (2) de 180° autour d'un axe de rotation de montage (34) le corps de liaison (2) soit posé avec la seconde face d'appui (23) sur la face d'appui (8) du coin d'appui de boîtier (7.1, 7.2, 7.3, 7.4).

2. Dispositif de liaison selon la revendication 1, **caractérisé en ce qu'**il est prévu sur le corps de liaison (2) une première face de serrage (26) fonctionnellement associée à la première face d'appui (22) et une seconde face de serrage (27) fonctionnellement associée à la seconde face d'appui (23), dans lequel dans l'état monté la première face de serrage (26) ou la seconde face de serrage (27) du corps de liaison (2) est tournée vers la face de serrage (12) prévue sur la coupe d'appui (4) du corps de boîtier (1) et dans lequel une distance minimale (35) déterminée transversalement à la direction de montage (29) de la première face d'appui (22) à la première face de serrage (26) du corps de liaison (2) est plus grande qu'une distance minimale (35) déterminée transversalement à la direction de montage (29) de la seconde face d'appui (23) à la seconde face de serrage (27) du corps de liaison (2), et/ou **en ce que** la première face de serrage (26) et la seconde face de serrage (27) définissent des côtés frontaux opposés l'un à l'autre du corps de liaison (2).

3. Dispositif de liaison selon la revendication 1 ou 2, **caractérisé en ce qu'**une distance (30) déterminée transversalement à la direction de montage (29) de la face de serrage (12) formée sur la partie d'appui (4) du corps de boîtier (1) à la première face de serrage (26) du corps de liaison (2) dans la première position de montage vaut entre 0,5 mm et 3,5 mm, de préférence entre 1 mm et 3 mm, et **en ce qu'**une distance (31) déterminée transversalement à la direction de montage (29) entre la seconde face de serrage (27) du corps de liaison (2) et la face de serrage (12) formée sur la partie d'appui (4) du corps de boîtier (1) dans la seconde position de montage vaut entre 2,5 mm et 5,5 mm, de préférence entre 3 mm et 5 mm.

4. Dispositif de liaison selon l'une quelconque des revendications 1 à 3, **caractérisé en ce que** les faces d'appui (22, 23) formées sur le corps de liaison (2) et les faces d'appui (8) formées sur le corps de boîtier (1) sont orientées sous un angle d'inclinaison correspondant (14) par rapport à un plan d'extension (13) des faces de serrage associées (12, 26, 27) du corps de liaison (2) et du corps de boîtier (1).

5. Dispositif de liaison selon l'une quelconque des revendications 1 à 4, **caractérisé en ce qu'**il est prévu sur le corps de liaison (2) des coins d'appui de liaison (20.1, 20.2, 20.3, 20.4, 21.1, 21.2, 21.3, 21.4) associés par paires en opposition l'un à l'autre, dans lequel les coins d'appui de liaison (20.1, 20.2, 20.3, 20.4, 21.1, 21.2, 21.3, 21.4) sont orientés de façon symétrique par rapport à l'axe de rotation de montage (34) du corps de liaison (2).

6. Dispositif de liaison selon l'une quelconque des revendications 1 à 5, **caractérisé en ce que** chaque fois au moins deux coins d'appui de boîtier (7.1, 7.2, 7.3, 7.4) et/ou deux coins d'appui de liaison (20.1, 20.2, 20.3, 20.4, 21.1, 21.2, 21.3, 21.4) sont formés sur le corps de boîtier (1) et/ou sur le corps de liaison (2) sur deux côtés opposés l'un à l'autre (5, 6, 18, 19), dans lequel les coins d'appui prévus sur un même côté (7.1, 7.2, 7.3, 7.4, 20.1, 20.2, 20.3, 20.4, 21.1, 21.2, 21.3, 21.4) sont prévus chaque fois à distance l'un de l'autre dans une direction longitudinale (9, 24) du corps de boîtier (1) et/ou du corps de liaison (2).

7. Dispositif de liaison selon l'une quelconque des revendications 1 à 6, **caractérisé en ce qu'**il est prévu pour la fixation du corps de liaison (2) sur la partie de liaison (3) du corps de boîtier (1) dans la première position de montage et/ou dans la seconde position de montage un assemblage par encliquetage, dans lequel il est prévu comme partie de l'assemblage par encliquetage un élément d'encliquetage élastique (25) et un logement d'encliquetage (15), qui sont tournés l'un vers l'autre dans la première position de montage et/ou dans la seconde position de montage de telle manière que l'élément d'encliquetage élastique (25) s'engage dans le logement d'encliquetage (15).

8. Dispositif de liaison selon l'une quelconque des revendications 1 à 7, **caractérisé en ce que** le corps de liaison (2) est réalisé en forme de U, dans lequel deux branches libres (16, 17) du corps de liaison (2) sont élastiquement flexibles et dans lequel il est prévu sur des côtés intérieurs opposés (18, 19) des branches libres (16, 17) chaque fois au moins un premier coin d'appui de liaison (20.1, 20.2, 20.3, 20.4) et un second coin d'appui de liaison 821.1, 21.2, 21.3, 21.4).

9. Dispositif de liaison selon l'une quelconque des revendications 1 à 8, **caractérisé en ce que** l'axe de rotation de montage (34) est orienté dans la direction de montage (29) et/ou **en ce que** l'axe de rotation de montage (34) définit un axe de symétrie du corps de liaison (2).
